(19) **Europäisches Patentamt**

**European Patent Office**

**Office européen des brevets**

(11) **EP 0 979 011 A1**

(12) **EUROPEAN PATENT APPLICATION**

(43) Date of publication:
**09.02.2000 Bulletin 2000/06**

(51) Int. Cl.⁷: **H04N 7/36**

(21) Application number: **98830484.6**

(22) Date of filing: **06.08.1998**

| | |
|---|---|
| (84) Designated Contracting States:<br>**AT BE CH CY DE DK ES FI FR GB GR IE IT LI LU<br>MC NL PT SE**<br>Designated Extension States:<br>**AL LT LV MK RO SI**<br><br>(71) Applicant:<br>**STMicroelectronics S.r.l.**<br>**20041 Agrate Brianza MI (IT)**<br><br>(72) Inventors:<br>• **Pau, Danilo**<br>**20099 Sesto San Giovanni (IT)** | • **Bagni, Daniele**<br>**22056 Olgiate Molgora (IT)**<br>• **Pezzoni, Luca**<br>**20032 Cormano (IT)**<br><br>(74) Representative:<br>**Pellegri, Alberto et al**<br>**c/o Società Italiana Brevetti S.p.A.**<br>**Piazza Repubblica, 5**<br>**21100 Varese (IT)** |

(54) **Detection of a change of scene in a motion estimator of a video encoder**

(57) The compression and coding of digital data pertaining to video sequences of pictures including motion estimation for removing temporal redundance greatly benefit from an ability to recognize the occurrence of a change of scene in order to command the prediction computation of the pictures using only a forward motion estimation for pictures preceding the change of scene and only a backward motion estimation for picture subsequent the change of scene of a given sequence. According to the method of the invention, a change of scene is reliably detected by checking two distinct indexes. Spurious detections in the event of noisy pictures, zooming and other situations that may affect either one or the other index are prevented.

FIG. 3

**Description**

FIELD OF THE INVENTION

This invention relates to systems of motion estimation in processing video images for video compressors and coders.

DISCUSSION OF THE STATE OF THE ART ON MOTION ESTIMATION

The concept at the base of motion estimation is the following: a set of pixels of a certain field of a picture may be placed in a position of the same field of the successive picture obtained by translating the preceding one. Of course, these transpositions of objects may expose to the video camera parts that were not visible before as well as changes of their shape (e.g. zooming and the like).

The family of algorithms suitable to identify and associate these portions of images is generally referred to as "motion estimation". Such an association permits to calculate the portion of difference image by removing the redundant temporal information making more effective the subsequent process of compression by DCT, quantization and entropic coding.

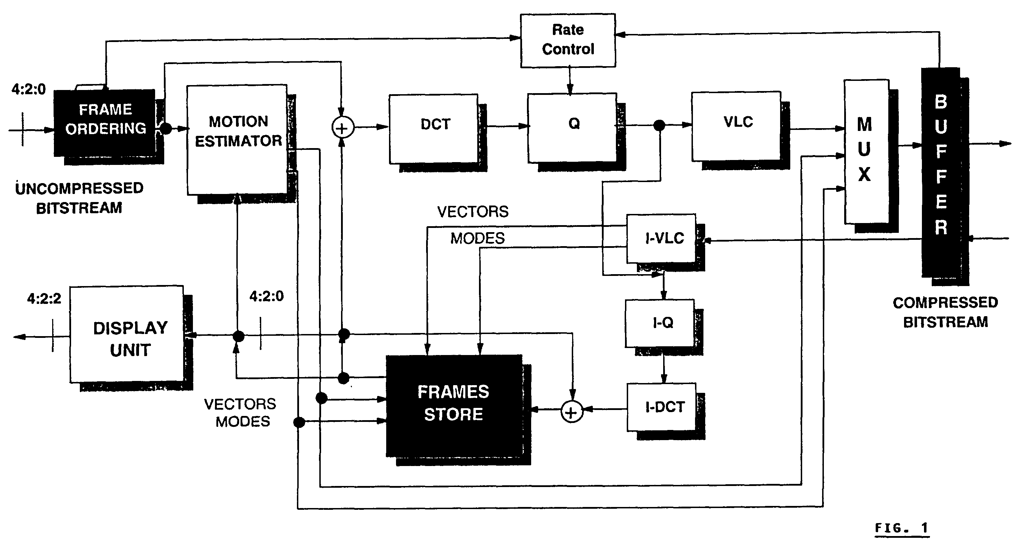

Such a method finds in the standard MPEG-2 a typical example. A typical block diagram of a video MPEG-2 coder is depicted in Fig. 1.

Such a system is made up of the following functional blocks:

1) Field ordinator
This blocks is composed of one or several field memories outputting the fields in the coding order required by the MPEG standard. For example, if the input sequence is I B B P B B P etc., the output order will be I P B B P B B ... .

I (Intra coded picture) a field and/or a semifield containing temporal redundance;
P (Predicted-picture) is a field and/or semifield from which the temporal redundance in respect to the preceding I or P (previously co-decoded) has been removed;
B (Biredictionally predicted-picture) is a field and/or a semifield whose temporal redundance in respect to the preceding I and subsequent P (or preceding P and successive P) has been removed (in both cases the I and P pictures must be considered as already co/decoded).

Each frame buffer in the format 4:2:0 occupies the following memory space:

| standard PAL | 720 x 576 x 8 for the luminance (Y) | = 3,317,760 bit |
|---|---|---|
| | 360 x 288 x 8 for the chrominance (U) | = 829,440 bit |
| | 360 x 288 x 8 for the chrominance (V) | = 829,440 bit |
| | total Y + U + V | = 4,976,640 bit |
| standard NTSC | 720 x 480 x 8 for the luminance (Y) | = 2,764,800 bit |
| | 360 x 240 x 8 for the chrominance (U) | = 691,200 bit |
| | 360 x 240 x 8 for the chrominance (V) | = 691,200 bit |
| | total Y + U + V | = 4,147,200 bit |

2) Motion estimator
This is the block that removes the temporal redundance from the P and B pictures.

3) DCT
This is the block that implements the cosine-discrete transform according to the MPEG-2 standard.
The I picture and the error pictures P and B are divided in 8*8 blocks of pixels Y, U, V on which the DCT transform is performed.

4) Quantizer Q

An 8*8 block resulting from the DCT transform is then divided by a quantizing matrix in order to reduce more or less drastically the magnitude of the DCT coefficients. In such a case, the information associated to the highest frequencies, less visible to human sight, tends to be removed. The result is reordered and sent to the successive block.

5) Variable Length Coding (VLC)

The codification words output from the quantizer tend to contain null coefficients in a more or less large number, followed by nonnull values. The null values preceding the first nonnull value are counted and the count figure constitutes the first portion of a codification word, the second portion of which represents the nonnull coefficient.

These paired values tend to assume values more probable than others. The most probable ones are coded with relatively short words (composed of 2, 3 or 4 bits) while the least probable are coded with longer words. Statistically, the number of output bits is less than in the case such methods are not implemented.

6) Multiplexer and Buffer

Data generated by the variable length coder, the quantizing matrices, the motion vectors and other syntactic elements are assembled for constructing the final syntax contemplated by the MPEG-2 standard. The resulting bitstream is stored in a memory buffer, the limit size of which is defined by the MPEG-2 standard and cannot be overflown. The quantizer block Q attends to the respect of such a limit, by making more or less drastic the division of the DCT 8*8 blocks depending on how far to the filling limit of such a memory buffer the system is and on the energy of the 8*8 source block taken upstream of the motion estimation and DCT transform process.

7) Inverse Variable Length Coding (I-VLC)

The variable length coding functions specified above are executed in an inverse order.

8) Inverse Quantization (IQ)

The words output by the I-VLC block are reordered in the 8*8 block structure, which is multiplied by the same quantizing matrix that was used for its precedent coding.

9) Inverse DCT (I-DCT)

The DCT transform function is inverted and applied to the 8*8 block output by the inverse quantization process. This permits to pass from the domain of spatial frequencies to the pixel domain.

10) Motion Compensation and Storage

At the output of the I-DCT block may alternatively be present:

- a decoded I picture (or semipicture) that must be stored in a respective memory buffer for removing the temporal redundancy in respect thereto from subsequent P and B pictures;
- a decoded prediction error picture (semipicture) P or B that must be summed to the information removed previously during the motion estimation phase. In case of a P picture, such a resulting sum, stored in dedicated memory buffer is used during the motion estimation process for the successive P pictures and B pictures.

These field memories are generally distinct from the field memories that are used for re-arranging the blocks.

11) Display Unit

This unit converts the pictures from the format 4:2:0 to the format 4:2:2 and generates the interlaced format for displaying the images.

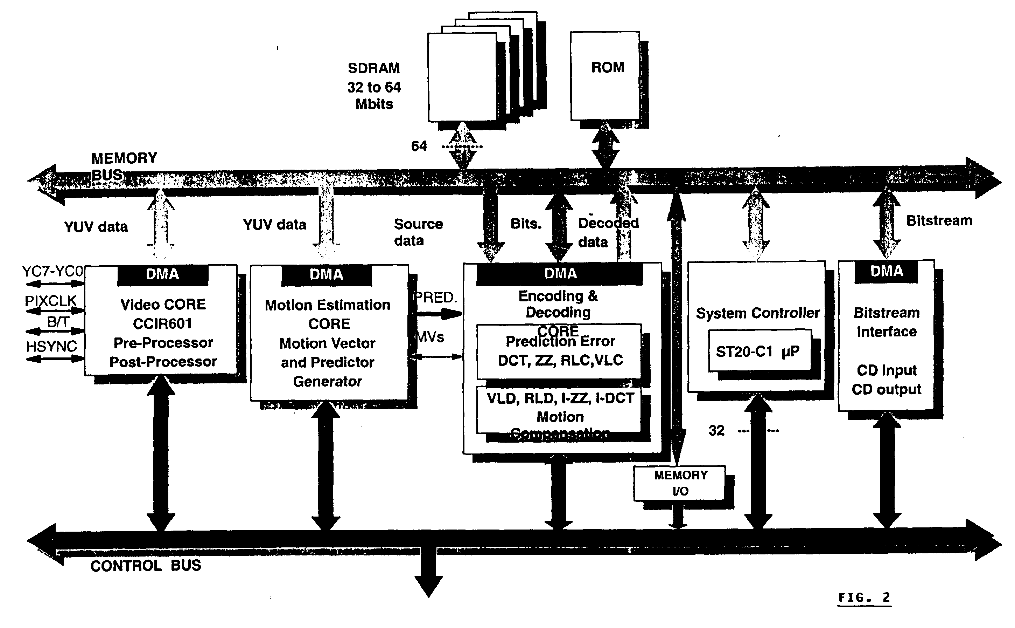

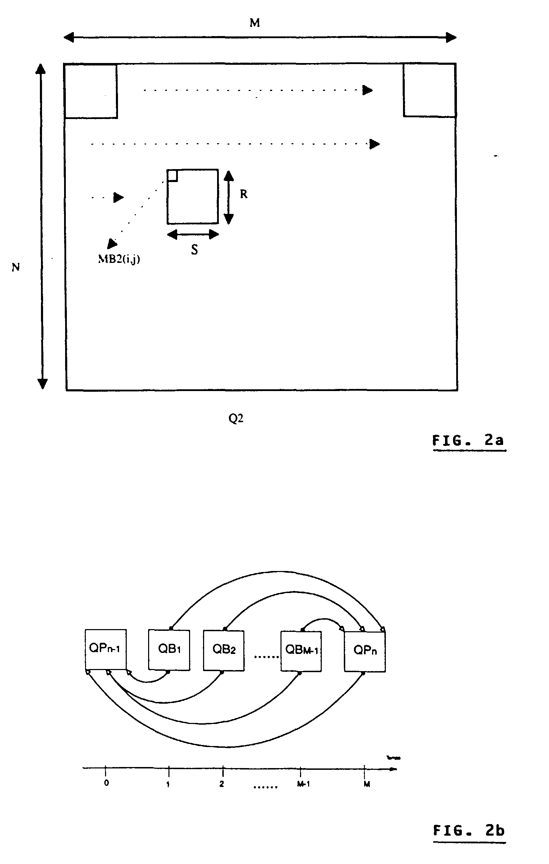

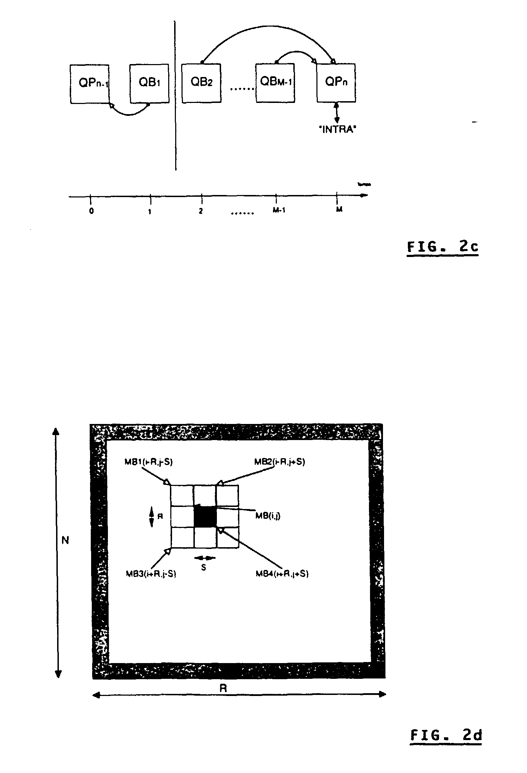

The ordering of the functional blocks depicted in Fig. 1, in an architecture implementing the above-described coder is shown in Fig. 2. A distinctive feature is in the fact that the field rearrangement block (1), the block (10) for storing the already reconstructed P and I pictures and the block (6) for storing the bitstream produced by the MPEG-2 coding, are integrated in memory devices external to the integrated circuit of the core of the coder. The decoder accesses to the external memory (DRAM) through a single interface, suitably managed by an integrated controller.

Moreover, the preprocessing block converts the received images from the format 4:2:2 to the format 4:2:0 by filtering and subsampling of the chrominance. The post-processing block implements a reverse function during the decoding and displaying phase of the images.

The coding phase employs also a decoding step for generating the reference pictures in order to make operative the motion estimation. For example, the first I picture is coded, thence it is decoded, stored (as described in paragraph 10) and is used for calculating the prediction error that will be used to code the subsequent P and B pictures.

The play-back phase of the data stream previously generated by the coding process uses only the inverse functional blocks (I-VLC, I-Q, I-DCT, etc.), never the direct functional blocks.

From this point of view, it may be said that the coding and the decoding implemented for the subsequent displaying of the images are nonconcurrent processes within the integrated architecture.

The scope of the motion algorithm estimation is that of predicting images/semifields in a sequence, obtaining them as a composition of a whole pixel blocks, referred to as predictors, originating from preceding or future images/semifields.

The MPEG2 standard include three types of pictures/semifield:

♦ **I pictures** (Intra coded picture) are pictures that are not submitted to motion estimation, they therefore contain temporal redundancy and are fundamental for the picture coding of the other two types;

♦ **P pictures** (predicted picture) are the pictures whose temporal redundancy has been removed through the motion estimation in respect to the I or P pictures preceding them;

♦ **B pictures** (Bidirectionally predicted picture) are the pictures whose temporal redundancy has been removed through the motion estimation in respect to the I and P pictures preceding them and/or future.

According to an exhaustive-search motion estimator, the process is as follows.

P field or semifield

Let us consider two fields of a picture (the same applies to the semifields), Q1 at the instant t and the subsequent field Q2 at the instant $t+(kp)*T$. The term kp is a constant dependent on the number of B fields existing between the preceding I and the subsequent P (or between two P), T is the field period (1/25 sec. for the PAL standard, 1/30 sec. for the NTSC standard). Q1 and Q2 are constituted by luminance and chrominance components. Let's suppose to apply the motion estimation only to the most energetic and therefore richer of information component, such as the luminance, representable as a matrix of N lines and M columns. Let us divide Q1 and Q2 in portions called macroblocks, each of R lines and S columns.

The results of the divisions N/R and M/S must be two integer numbers, not necessarily equal to each other.

Let Mb2(i,j) be a macroblock defined as the reference macroblock belonging to the field Q2 and whose first pixel, in the top left part thereof is at the intersection between the i-th line and the j-th column.

The pair (i,j) is characterized by the fact that i and j are integer multiples of R and S, respectively.

Fig. 2a shows how said reference macroblock is positioned on the Q2 picture, while the horizontal dash line arrows indicate the scanning order used for identifying the various macroblocks on Q2.

Let us suppose to project MB2(i,j) on the Q1 field, obtaining MB1(i,j).

Let us define on Q1 a search window having its center at (i,j) and composed of the macroblocks MBk[e,f] where k is the macroblock index. The k-th macroblock is identified by the coordinates (e,f), such that:

$$-p <= (e-i) <= +p \qquad -q <= (f-j) <=+q$$

The indexes e and f being integer numbers.

Each of said macroblock is a possible predictor of MB2(i,j).

The various motion estimation algorithms differ from each other depending on the way the predictors are searched and selected in the search window.

The predictor that minimizes a certain cost function is chosen among the whole set of possible predictors.

Such a function may vary according to the selected motion estimation algorithm, for example in the case of the MPEG2 standard, the predictor that minimizes the L1 norm in respect to the reference macroblock is searched. Such a norm is equal to the sum of the absolute values of the differences among homologous pixels belonging to MB2(i,j) and to Mbk(e,f), respectively. R*S values contribute to each sum, the resulting value of which is called distortion.

The predictor most similar to MB2(i,j) is thence identified by the coordinates of the prevailing predictor at the end of the motion estimation step. The vector constituted by the components resulting from the difference between the position of the prevailing predictor and MB2(i,j) is referred to as the motion vector and describes how MB2(i,j) derives from a traslation of a similar macroblock in the preceding field.

<u>B field or semifield</u>

Let us consider three fields of a picture (the same may be applied also to semifields), $QP_{n-1}$ at the instant t, $QBk_B$ at the instant $t+(k_B)*T$ and $QP_n$ at the instant $t+(k_P)*T$ with $k_P$ and $k_B$ dependent on the preselected number of B fields (or semifields). T is the field period (1/25 sec. for the PAL standard, 1/30 sec. for the NTSC standard). $QP_{n-1}$, $QBk_B$ and $QP_n$ are constituted by luminance and chrominance components. Let us suppose to apply the motion estimation only to the most energetic and therefore richer of information component, such as the luminance, representable as a matrix of N lines and M columns. Let's divide $QP_{n-1}$, $QBk_B$ and $QP_n$ in portions called macroblocks, each of R lines and S columns.

The results of the divisions N/R and M/S must be two integer numbers, not necessarily equal.

Let us MB2(i,j) be a macroblock defined as the reference macroblock belonging to the field Q2 and whose first pixel, in the top left part thereof is at the intersection between the i-th line and the j-th-column.

The pair (i,j) is characterized by the fact that i and j are integer multiples of R and S, respectively.

Let's suppose to project MB2(i,j) on the $Qp_{n-1}$ field, obtaining MB1 (i,j), and on the $QP_n$, obtaining MB3(i,j).

Let's define on $QP_{n-1}$ a search window with its center at (i,j) and including the macroblocks MB1k[e,f] and on $QP_n$ a similar search window whose dimension may even be different, or in any case predefined, made up by MB3k[e,f] where k is the macroblock index. The k-th macroblock on the $QP_{n-1}$ is identified by the coordinates (e,f), such that:

$$-p1 <= (e-i) <= +p1 \qquad -q1 <= (f-j) <= +q1$$

while the k-th macroblock on the $QP_n$ field is identified by the coordinates (e,f) such that:

$$-p3 <= (e-i) <= +p3 \qquad -q3 <= (f-j) <= +q3$$

the indexes e and f being integer numbers.

Each of said macroblock is said to be a predictor of MB2(i,j).

Thence, there are in this case two types of predictors for MB2(i,j): those obtained on the field that temporally precedes the one containing the block to be estimated (I or P) referred to as "forward", and those obtained on the field that temporally follows the one containing the block to be estimated (I or P) referred to as "backward".

Among the predictors belonging to the two sets of possible predictors, sets that depends on the type of motion estimation algorithm in use, two predictors are selected, one backwards and one forward, which minimize a certain cost function of the hardware implementation.

This function may vary depending on the type of motion estimation that is chosen, for example if we chose the MPEG2 standard, we shall search for the predictor that minimizes the L1 norm in respect to the reference macroblock. Such norm is equal to the sum of absolute values of the differences among homologous pixels belonging to MB2(i,j) and MB1k(e,f) onto MB3k(e,f), respectively R*S values contribute to each sum, whose result is called distortion.

Hence, a certain number of forward distortion values are obtained among which choose the lowest is chosen, by identifying a prevailing position $(e_f, f_f)$ on the field $QP_{n-1}$, and a certain number of backward distortion values, among which again the lowest value is chosen by identifying a new prevailing position $(e_b, f_b)$ on the $Qp_n$ field.

Moreover, the distortion value between MB2(i,j) and a theoretical macroblock obtained by linear interpolation of the two prevailing predictors is calculated.

Thence, MB2(i,j) may be finally, estimated by using three types of macroblocks: the forward predictor $(e_f, f_f)$, the backward predictor $(e_b, f_b)$ or an average of both.

The vector constituted by the difference components, between the position of the prevailing predictor(s) and of MB2(i,j) are defined as the motion vectors and describe how MB2(i,j) derives from a translation of a macroblock similar to it in the preceding field and/or in the successive field.

An exhaustive search motion estimator and hierarchical recursive motion estimator are described in a precedent European patent application No. 98830163.6, in the name of the same applicant.

The known motion estimators perform a motion estimate by considering in a linear way the pictures from the first of a certain sequence to the last of the sequence. During the sequence, at some points of the picture, changes of scene occur. The motion estimation process carried out by known estimators attempts in any case to predict the picture in respect to preceding and/or to the successive picture even though they belong now to different scenes and are therefore largely uncorrelated to the picture under estimation. because of this, the predicted picture inevitably will contain blocks of pixels that belong to a different scene.

This constitutes a serious drawback and reduces the performance that may be obtained from known motion estimators when changes of scene occur during a sequence of video images.

OBJECT AND SUMMARY OF THE INVENTION

These drawbacks and inconvenients of the known motion estimators are overcome by the present invention that provides a motion estimation algorithm for coding systems of video pictures in which reference fields (intra coded pictures) are generated and stored to be used for dynamically calculate the prediction error in coding successive P and/or B pictures (being P the predicted picture and B the bidirectionally predicted picture), wherefrom the temporal redundance is removed through the motion estimation in respect to preceding the I or P pictures, for the case of P pictures, or preceding and/or successive I or P pictures for the case of B pictures.

The method of the invention is based on identifying an occurred change of scene by monitoring certain parameters on a certain number of pictures temporally in sequence, and on using of an assertion signal of an occurred change of scene to limit the use only of the forward motion estimation for the images preceding the change of scene and only the backward estimation for pictures following the change of scene between two Intra pictures.

The algorithm of the invention is defined in the appended claims.

BRIEF DESCRIPTION OF THE DRAWINGS

**Figure 1** is a functional scheme of a MPEG-2 MP@ML video coder, including a block called "motion estimator" which is the object of the present invention;

**Figure 2** shows the architecture of the MPEG-2 MP@ML coder of Fig. 1;

**Figure 2a** shows the position of a macroblock taken on a certain Q2 picture, the horizontal dash line arrows indicating the scanning order;

**Figure 2b** shows the normal mechanism of motion estimation performed on a certain number of pictures;

**Figure 2c** shows a modified mechanism of motion estimation according to the present invention considering an occurred change of scene between the $QB_1$ and $QB_2$ pictures.

**Figure 2d** shows the relative position of macroblocks (nonperipheral) that are considered in establishing a smoothness index.;

**Figure 3** represents the basic scheme of the procedure for detecting a change of scene, according to the present invention;

**Figure 4** shows a graph depicting the smoothness index for a typical sequence of pictures during a table tennis play;

DESCRIPTION OF THE ALGORITHM OF THE INVENTION FOR RECOGNIZING A CHANGE OF SCENE

As discussed above, the motion estimation algorithms identify one or more predictors and one or more motion vectors for each macroblock belonging to the image to be predicted, thus generating a motion field.

In describing the method of the invention reference will be made to a set of fields of number equal to the temporal distance (previously fixed to be equal to M) between two successive fields of P or I type (therefore, a total number of fields equal to M+2 will be considered altogether).

Let the temporal distance between two successive picture equal to a field period and let us suppose to have already motion estimated all the M+2 pictures obtaining their respective motion fields.

Supposing that no change of scene has occurred in this sequence of pictures, it is correct that the estimation be made as depicted in Fig. 2b.

However, if a change of scene had occurred, for example between $QB_1$ and $QB_2$ then the estimation should advantageously occur as depicted in Fig. 2c.

Thence, since the picture $QB_1$ pertains to the scene to which $QP_n$ belongs, then $QB_1$ must be predicted only by $QP_{n-1}$ and not by $QP_n$ which belongs to another scene. The same stands also for $QB_2$ and $QB_{M-1}$ which must be predicted only in respect to $QP_n$ and not to $QP_{n-1}$.

This cannot be applied to $QP_n$, which being the base for the prediction of the successive and/or preceding pictures and not being predicted in respect to $QP_{n-1}$ must contain macroblocks coded all as intra, thus becoming an I picture.

Therefore, a precise identification of the changes of scene is of great importance in order to undertake a correct pictures prediction.

The method of the invention exploits the correlation that exists among motion vectors belonging to nearby macroblocks. Indeed, if in a sequence there is no change of scene, the motion estimation algorithm generates ordered motion fields because they determine a real traslation of objects among the various pictures.

Thereby, all the macroblocks of pixel that form the object will shift in the same direction altogether and therefore will have equal motion vectors. However, if a change of scene occurs, the motion estimation algorithm generates uncorrelated motion fields because they do not determine a real movement of the objects. Indeed, the algorithms attempt to determine the traslation of all the elements contained in the picture in respect to pictures that belong to other scenes and which are likely not to contain them at all. Hence, all the macroblocks of pixel making up the object will have uncorrelated motion vectors, each vector having a direction and a value different from the others.

This situation will produce an unsatisfactory motion estimation and many macroblocks will be coded as intra (I-picture).

To determine the "validity" of the traslation vectors found by the algorithm of motion estimation, an index of arrangement of the picture motion field, called "smoothness" is introduced.

The smoothness index is defined by the following expressions:

$$s(t) = \sum_X \sum_h \frac{|\Delta Xh| + |\Delta Yh|}{4 * Nb}$$

$$\Delta Xh = mv\_MB(i,j)x - mv\_MBh(i \pm R, j \pm S)x$$

$$\Delta Yh = mv\_MB(i,j)y\_mv\_MBh(i \pm R, j \pm S)y$$

Where:

- mv_MB(.,.) is the motion vector associated to the macroblock MB (.,.);
- the index X of the sum signifies that it is extended to all macroblocks of the picture under scrutiny with the exception of the peripheral ones.
- x and $\Delta y$ are the differences of the motion vector coordinates between the actual macroblock MB(i,j) and one of the macroblocks MB(.,.), as shown in Fig. 2d;
- The index h (h=1,2,3,4) signifies that $\Delta x$ and $\Delta y$ between MB(i,j) and each of the four Mbh(.,.) are calculated;
- Nb is the number of macroblocks contained in the picture, excluding the peripheral ones.

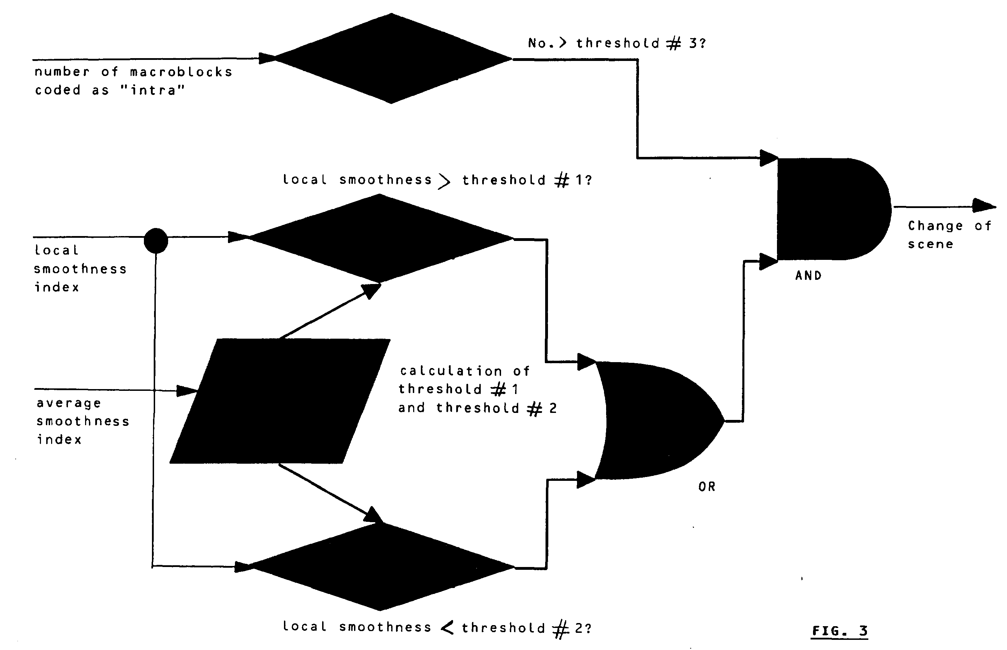

The change of scene is determined according to the scheme of Fig. 3 by combining two factors:

- a high number of macroblocks of a field or picture being processed coded as intra and greater than a certain threshold number determined through statistical considerations;
- a variation of the smoothness index in respect to two thresholds both referred to the average smoothness index of the last pictures, also these thresholds being derived from statistical considerations.

Upon a simultaneous occurrence of these two conditions a change of scene may be reliably determined and thereby the maintenance of an effective motion estimation may be ensured also in presence of a change of scene.

The use of at least two distinct indexes in combination has been found effective in preventing spurious recognitions of changes of scene.

Indeed, even if a change of scene does not occur, it may happen that a high number of macroblocks be coded as intra in case, for example of pictures affected by noise, and in a situation like this use the smoothness index beside the number of macroblocks coded as intra provides an effective discrimination. Similarly, in case of a zooming the smoothness index would increase but not so markedly the number of intra coded macroblocks.

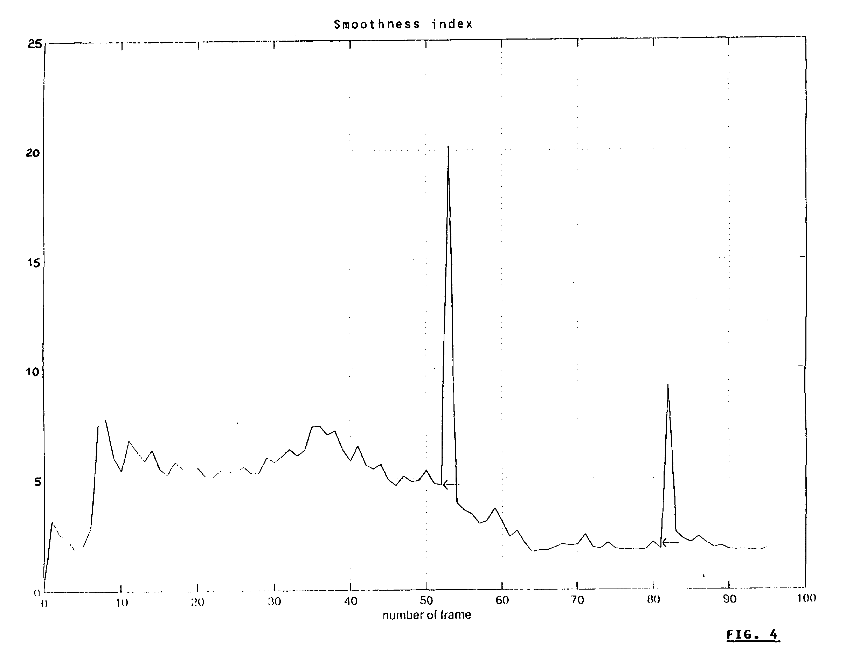

Fig. 4 depicts the smoothness index for a table tennis play sequence presenting two changes of scene and one zoom.

The two changes of scene coincide with the two points indicated by the arrows, and as it may be noticed, the smoothness index has a remarkable peak, while it remains approximately constant for the rest of the sequence.

The zoom coincides with frame number 6 and it may be noticed that the smoothness index increments at this point which could be erroneously interpreted as if there had been a change of scene. However, since the number of macroblocks coded as intra remains low, such an erroneous interpretation is averted.

From Figure 4 may also be observed how important the calculation of the above cited smoothness thresholds based on an average smoothness value of the last pictures is. Indeed, the frames from number 10 to number 52 have an average smoothness index higher than that of the other frames of the sequence.

The algorithm that determines the change of scene is the following:

- calculation among all the macroblocks of the picture, with the exclusion of those of the outer crown of the picture, of a local smoothness index (=**local_smooth**)
- calculation of the number of macroblocks coded as INTRA (=**number_of_intra**)
- calculation of the average smoothness index of the last 4 (as an example) pictures (=**average_smooth**)
- **threshold1**=average_smooth*$\alpha$
- **threshold2**=average_smooth*$\beta$
- **threshold3**=number_of_intra*$\chi$
  where $\alpha$, $\beta$ and $\chi$ are numerical coefficients
- **if ((number-of-intra>threshold3) and ((local _smooth>threshold1) or (local_smooth<threshold2)))**
  **then -------> change of scene**
  **else -------> no change of scene**

The usefulness of the method of the invention increases in the case of algorithms of motion estimation implementing successive steps of processing as for example in the hierarchical estimator and in the recursive hierarchical estimator described in said preceding European patent application No. 98830163.6.

In fact, identification of an intervening change of scene may be performed at an intermediate point of the step noise estimation algorithm and the result may be used to condition the successive steps of the motion estimation algorithm for an overall optimization.

The invention is particularly suited for a recursive hierarchical estimator because it produces a particularly coherent motion vector field, and such accentuated correlation among the traslation vectors relative to adjacent macroblocks makes even more reliable the method of the invention for timely detecting a change of scene.

**Claims**

1. A method of motion estimation from successive picture fields for coding systems of video pictures comprising a decoding of pictures by utilizing reference pictures (Intra coded pictures) stored and used to dynamically calculate a prediction error used to code successive pictures (Predicted picture, Bidirectionally predicted pictures) wherefrom temporal redundance is removed through a motion estimation in respect to preceding I or P pictures (Predicted pictures) or preceding them and/or following them (Bidirectionally predicted picture) carried out by macroblocks of pixels in which said pictures are divided, characterized in that it comprises

   defining and calculating a smoothness index of a motion field of each picture by analyzing the motion vectors of all the macroblocks of subdivision of the picture with the exception of the peripheral macroblocks;
   calculating the average smoothness index for a certain preestablished number of last processed pictures;
   monitoring the number of macroblocks belonging to the same picture that are coded as intra macroblocks;
   identifying a change of scene from a combination of the number of macroblocks belonging to the same picture coded as higher intra compared to a certain threshold number and/or of the variation of the smoothness index of two successive pictures compared to a top and a bottom threshold based on the average value of the smoothness index of said preestablished number of last processed pictures;
   using the identification of a change of scene to command the prediction computation of the pictures using only a forward motion estimation for pictures preceding the change of scene and only a backward motion estimation for picture subsequent the change of scene.

2. The method according to claim 1, characterized in that said smoothness index is defined as:

$$s(t) = \sum_{X} \sum_{h} \frac{|\Delta Xh| + |\Delta Yh|}{4 * Nb}$$

$$\Delta Xh = mv\_MB(i,j)x - mv\_MBh(i \pm R, j \pm S)x$$

$$\Delta Yh = mv\_MB(i,j)y\_mv\_MBh(i\pm R,j\pm S)y$$

where:

- mv_MB(.,.) is the motion vector associated to the macroblock MB (.,.);
- the index X of the sum signifies that the sum is extended to all the macroblocks of the picture being processed with the exception of the peripheral ones;
- x and $\Delta$y we the differences of the motion vector coordinates between the actual macroblock MB(i,j) and one of said macroblocks MB(.,.);
- the index h (h=1,2,3,4) identifying said other one of said macroblocks;
- Nb is the total number of macroblocks contained in the picture excluding the peripheral ones.

3. An MPEG encoder comprising a system of motion estimation from homonymous fields of successive pictures, characterized in that the algorithm of motion estimation that is performed is conditioned by the identification of an intervened change of scene according to the method of claim 1.

FIG. 1

EP 0 979 011 A1

FIG. 2

M

N

R

S

MB2(i,j)

Q2

**FIG. 2a**

QP<sub>n-1</sub>   QB1   QB2   ......   QB<sub>M-1</sub>   QP<sub>n</sub>

0        1        2      ......    M-1      M

**FIG. 2b**

**FIG. 2c**

**FIG. 2d**

FIG. 3

Smoothness index

number of frame

FIG. 4

European Patent
Office

**EUROPEAN SEARCH REPORT**

Application Number

EP 98 83 0484

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US 5 774 593 A (ZICK GREGORY L ET AL) 30 June 1998 <br> * column 16, line 53 - line 56 * <br> * column 18, line 65 - column 20, line 3 * <br> * abstract * | 1-3 | H04N7/36 |
| A | US 5 724 100 A (KUCHIBHOTLA PRASHANTH) 3 March 1998 <br> * column 3, line 50 - column 4, line 48 * <br> * abstract; figures 1,2 * | 1,3 | |
| A | EP 0 705 041 A (SONY CORP) 3 April 1996 <br> * page 9, line 40 - line 47 * <br> * abstract; figures 6,9A-9D * | 1,3 | |
| A | LIU H -C H ET AL: "SCENE DECOMPOSITION OF MPEG COMPRESSED VIDEO" PROCEEDINGS OF THE SPIE, vol. 2419, 7 February 1995, pages 26-37, XP000671108 <br> * section 3 * <br> * page 35, line 15 - page 36, line 1 * | 1-3 | |
| A | HSU P R ET AL: "SPATIOTEMPORAL REPRESENTATION OF DYNAMIC OBJECTS" PROCEEDINGS OF THE COMPUTER SOCIETY CONFERENCE ON COMPUTER VISION A PATTERN RECOGNITION, NEW YORK, JUNE 15 - 18, 1993, 15 June 1993, pages 14-19, XP000416296 INSTITUTE OF ELECTRICAL AND ELECTRONICS ENGINEERS <br> * abstract * | 1-3 | TECHNICAL FIELDS SEARCHED (Int.Cl.6) <br><br> H04N |

The present search report has been drawn up for all claims

| Place of search | Date of completion of the search | Examiner |
|---|---|---|
| THE HAGUE | 12 January 1999 | La, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 98 83 0484

This annex lists the patent family members relating to the patent documents cited in the above-mentioned European search report.
The members are as contained in the European Patent Office EDP file on
The European Patent Office is in no way liable for these particulars which are merely given for the purpose of information.

12-01-1999

| Patent document cited in search report | | Publication date | Patent family member(s) | | Publication date |
|---|---|---|---|---|---|
| US 5774593 | A | 30-06-1998 | NONE | | |
| US 5724100 | A | 03-03-1998 | EP<br>WO | 0885526 A<br>9731485 A | 23-12-1998<br>28-08-1997 |
| EP 0705041 | A | 03-04-1996 | JP<br>US<br>US | 8098185 A<br>5757968 A<br>5832121 A | 12-04-1996<br>26-05-1998<br>03-11-1998 |

EPO FORM P0459

For more details about this annex : see Official Journal of the European Patent Office, No. 12/82